# EUROPEAN PATENT APPLICATION

(11) **EP 4 365 036 A1**
(43) Date of publication of application: **08.05.2024**
(21) Application number: 22833030.4
(22) Date of filing: 24.06.2022
(51) Int. Cl.: B60R 21/215, B29C 45/00, B32B 25/08, C08J 5/18, C08L 23/08, C08L 23/10, C08L 53/02

(54) **AIRBAG-HOUSING COVER, PRODUCTION METHOD THEREFOR, THERMOPLASTIC ELASTOMER COMPOSITION, MOLDED OBJECT, AND MOLDED COMPOSITE**

(30) Priority: 30.06.2021 JP 2021108344; 21.12.2021 JP 2021207288
(71) Applicant: MCPP Innovation LLC, Tokyo 100-8251 (JP)
(72) Inventor: KINOSHITA, Yuma, Tokyo 100-8251 (JP)
(74) Representative: Vossius & Partner Patentanwälte Rechtsanwälte mbB
(86) International application number: PCT/JP2022/025321
(87) International publication number: WO 2023/276883

(57) **Abstract**

An airbag housing cover made of a thermoplastic elastomer composition comprising a propylene-based random copolymer and a styrene-based elastomer having a glass transition temperature in the range of -65°C or higher and -45°C or lower, wherein a total content of the propylene-based random copolymer and the styrene-based elastomer is more than 40% by mass and 100% by mass or less with respect to 100% by mass of the thermoplastic elastomer composition.

## Description

### Technical Field

The present invention relates to an airbag housing cover excellent in low-temperature impact resistance, high-temperature strength and light transmittance, a method for producing the same, and a thermoplastic elastomer composition capable of providing such an airbag housing cover. The present invention also relates to a molded article and a composite molded article using this thermoplastic elastomer composition.

### Background Art

An automotive airbag system is a system that protects a driver and a passenger in the event of a car collision, and consists of a device for defecting an impact of a collision and an airbag device. An airbag device is installed in a steering wheel, an instrument panel in front of a front passenger seat, a driver's seat and a front passenger seat, front and side pillars, or the like.

When an airbag of an airbag device is inflated, an airbag housing cover of the airbag device has a possibility that that the cover is destroyed and broken pieces thereof scatter, or a possibility that the cover will scatter due to destruction of a cover mounting portion of the airbag device. For this reason, various proposals have been made regarding the structure and material for the purpose of preventing the cover from being abnormally destroyed and scattered.

In the case where a deployment output of an airbag device is increased, an airbag housing cover thereof has a possibility that it is injured during deploying at a low or high temperature. Therefore, from the viewpoints of enhanced safety and freedom of design, there is a demand for developing a material of a thermoplastic elastomer composition having a high low-temperature impact resistance and a high high-temperature strength.

As such a thermoplastic elastomer composition for an airbag housing cover, a thermoplastic elastomer composition comprising a propylene-based resin as a hard segment and an olefin-based rubber such as ethylene-propylene elastomer (EPDM, EPR, etc.) or a styrene-based elastomer as a soft segment are known.

For example, PTL 1 discloses a thermoplastic elastomer composition for an airbag housing cover, which contains a propylene-based resin, a styrene/butadiene/styrene block copolymer (SBS), and an ethylene/ *α* -olefin copolymer.

There are known techniques for increasing transparency of a thermoplastic elastomer composition containing propylene-based resins and styrene-based elastomers (PTL 2 and PTL 3).

PTL 4 discloses a composition containing a propylene-based resin, a styrene-based elastomer, and an ethylene/ *α* -olefin copolymer as a polypropylene-based resin composition with excellent moldability, rigidity (flexural modulus), impact resistance (impact strength) and transparency.

PLT 5 discloses a thermoplastic elastomer composition comprising a propylene-based random copolymer and a styrene-based elastomer are blended. The thermoplastic elastomer composition is for powder molding which can be easily produced a fine powder at room temperature, and furthermore, can produce a molded article having excellent scratch resistance, heat resistance, and molded appearance.

PLT 6 discloses a thermoplastic elastomer composition for an airbag housing cover. The thermoplastic elastomer composition is for an airbag housing cover and comprises a propylene-based polymer, an olefin-based elastomer, a styrene-based elastomer, and an acrylic resin. The composition is improved in low-temperature impact resistance, molding appearance, and injection moldability.

PTL 1: JP 2019-38925 A
PTL 2: JP 2005-23148 A
PTL 3: JP 2012-512277 A
PTL 4: JP 2017-75209 A
PTL 5: JP 2004-137306 A
PTL 6: JP 2020-158615 A

In recent years, there is a design that incorporates a function as a touch panel display into a part of an airbag housing cover. This type of airbag housing cover is composed of a surface layer made of a film that serves as an interface for a touch panel display, and an airbag housing cover layer provided so as to be in contact with the surface layer. A lightable switch is embedded inside the airbag housing cover. In such a configuration, the airbag housing cover needs to be made of a material that transmits light so that a user can easily see the lighting of the switch. Therefore, the thermoplastic elastomer composition used for the airbag housing cover layer has been becoming necessary to have light transmittance to the extent that the user can visually recognize the lighting of the switch, in addition to the low-temperature impact resistance and the high-temperature strength that are conventionally required.

According to detailed studies by the present inventors, the thermoplastic elastomer composition used in the airbag described in PTL 1 has good low-temperature impact resistance and high-temperature strength, but dose not intend to have light transmittance as described above. Further, as described in PTL 1, it is necessary to bring a refractive index of an olefinic rubber closer to that of a propylene-based resin in order to increase the light transmittance of a thermoplastic elastomer using the propylene-based resin as a hard segment and the olefin-based rubber such as an ethylene-propylene elastomer (EPDM, EPR, etc.) as a soft segment. For this reason, it was found that a low-temperature impact resistance and a high-temperature strength are impaired when a material with a low refractive index is used as the olefinic rubber.

Although the thermoplastic elastomer composition described in PTL 2 has good optical transparency, it does not satisfy the low-temperature impact resistance and the high-temperature strength required for airbag applications.

The thermoplastic elastomer compositions of PTLs 3 and 4 have good optical transparency and a high-temperature strength, but do not satisfy low-temperature impact resistance.

In the thermoplastic elastomer compositions of PTLs 5 and 6, no consideration is given to low-temperature impact resistance, high-temperature strength, transparency, or light transmittance.

In addition, in none of the above-mentioned prior art, no consideration has been given to combining the resin film incorporating the operation function and design of the touch panel with the airbag housing cover for a touch panel display.

### Summary of Invention

The present invention has been made in view of the problems of the prior art as described above.

An object of the present invention is to provide an airbag housing cover that is excellent in low-temperature impact resistance, high-temperature strength, and light transmittance, and that is suitable for combination with a touch panel film, a thermoplastic elastomer composition, and a molded article and a composite molded article using this thermoplastic elastomer composition.

### Solution to Problem

The present inventors have found that a thermoplastic elastomer composition containing a propylene-based random copolymer and a specific styrene-based elastomer is excellent in low-temperature impact resistance, high-temperature strength, and optical transparency, and is suitable for combination with a touch panel film. The inventors have found that it is possible to provide an airbag housing cover and a molded article suitable for both, and have completed the present invention.

Specifically, a summary of the present invention lies in the following [1] to [20].

[1] An airbag housing cover made of a thermoplastic elastomer composition comprising a propylene-based random copolymer and a styrene-based elastomer having a glass transition temperature in the range of -65°C or higher and -45°C or lower, wherein a total content of the propylene-based random copolymer and the styrene-based elastomer is more than 40% by mass and 100% by mass or less with respect to 100% by mass of the thermoplastic elastomer composition.
[2] The airbag housing cover according to [1], wherein the airbag housing cover is for being arranged at a visible position.
[3] The airbag housing cover according to [1] or [2], wherein the styrene-based elastomer is linear.
[4] The airbag housing cover according to any one of [1] ~ [3], wherein the thermoplastic elastomer composition has a melt flow rate of 1.0g/10min or more and 50g/10min or less at a temperature of 230°C and a measurement load of 21.18N according to JIS K7210 (1999).
[5] The airbag housing cover according to any one of [1] ~ [4], wherein the content of the styrene-based elastomer in the thermoplastic elastomer composition is 45 parts by mass or more and 250 parts by mass or less relative to 100 parts by mass of the propylene-based random copolymer.
[6] The airbag housing cover according to any one of [1] ~ [5], wherein the thermoplastic elastomer composition further comprises 10 parts by mass or more and 100 parts by mass or less of an ethylene/ *α* -olefin copolymer relative to 100 parts by mass of the propylene-based random copolymer.
[7] The airbag housing cover according to any one of [1] ~ [6], wherein a styrene unit content of the styrene-based elastomer is 20% by mass or more and 25% by mass or less.
[8] The airbag housing cover according to [7], wherein the styrene-based elastomer consists of a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less.
[9] The airbag housing cover according to any one of [1] ~ [8], wherein a total light transmittance measured based on JIS K7136-1 for a sheet-like test piece having a thickness of 2 mm obtained by injection molding the thermoplastic elastomer composition under conditions of a resin temperature of 200°C and a mold temperature of 40°C is 65% or more.
[10] The airbag housing cover according to any one of [1] ~ [9], wherein a haze value measured based on JIS K7136-1 for a sheet-like test piece having a thickness of 2 mm obtained by injection molding the thermoplastic elastomer composition under conditions of a resin temperature of 200°C and a mold temperature of 40°C is 70% or less.
[11] A method for manufacturing the airbag housing cover according to any one of [1] ~ [10], comprising a step of injection molding the thermoplastic elastomer composition.
[12] A thermoplastic elastomer composition comprising a propylene-based random copolymer and a linear styrene-based elastomer having a styrene unit content of 20% by mass or more and 35% by mass or less and a glass transition temperature in the range of -65°C or higher and -45°C or lower, wherein a total content of the propylene-based random copolymer and the linear styrene-based elastomer is more than 40% by mass and 100% by mass or less with respect to 100% by mass of the thermoplastic elastomer composition, and the content of the linear styrene-based elastomer relative to 100 parts by mass of the propylene-based random copolymer is 45 parts by mass or more and 250 parts by mass or less, and the thermoplastic elastomer composition has a melt flow rate of 1.0g/10min or more and 50g/10min or less at a temperature of 230°C and a measurement load of 21.18N according to JIS K7210 (1999).
[13] The thermoplastic elastomer composition according to [12], wherein a total light transmittance measured based on JIS K7136-1 for a sheet-like test piece having a thickness of 2 mm obtained by injection molding the thermoplastic elastomer composition under conditions of a resin temperature of 200°C and a mold temperature of 40°C is 65% or more.
[14] The thermoplastic elastomer composition according to [12] or [13], wherein a haze value measured based on JIS K7136-1 for a sheet-like test piece having a thickness of 2 mm obtained by injection molding the thermoplastic elastomer composition under conditions of a resin temperature of 200°C and a mold temperature of 40°C is 70% or less.
[15] The thermoplastic elastomer composition according to any one of [12] ~ [14], wherein the thermoplastic elastomer composition further comprises 10 parts by mass or more and 100 parts by mass or less of an ethylene/ *α* -olefin copolymer relative to 100 parts by mass of the propylene-based random copolymer.
[16] The thermoplastic elastomer composition according to any one of [12] ~ [15], wherein the linear styrene-based elastomer has a styrene unit content of 20% by mass or more and 25% by mass or less.
[17] The thermoplastic elastomer consists of according to [16], wherein the styrene-based elastomer comprises a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less.
[18] A molded article made of the thermoplastic elastomer composition according to any one of [12] ~ [18].
[19] A composite molded article having a first layer containing the thermoplastic elastomer composition according to any one of [12] ~ [17] and a second layer made of a resin film.
[20] A composite molded article having a first layer made of a thermoplastic elastomer composition containing a propylene-based random copolymer and a styrene-based elastomer having a glass transition temperature in the range of -65°C or higher and -45°C or lower and a second layer made of a resin film.

The present invention also includes the following <1> to <11>.

<1> A thermoplastic elastomer composition for airbags containing the following component (A) and component (B).
   Component (A) : Propylene-based polymer
   Component (B): A hydrogenated styrene/conjugated diene block copolymer having a styrene unit content of 20% by mass or more and 35% by mass or less and a glass transition temperature in the range of -65°C or higher and -45°C or lower.
<2> The thermoplastic elastomer composition for airbags according to <1>, wherein a haze value measured based on JIS K7136-1 for a sheet-like test piece having a thickness of 2 mm obtained by injection molding the thermoplastic elastomer composition for airbags under conditions of a resin temperature of 200°C and a mold temperature of 40°C is 70% or less.
<3> The thermoplastic elastomer composition for airbags according to <1> or <2>, wherein a total content of the component (A) and the component (B) is 70% by mass or more and 100% by mass or less with respect to 100% by mass of the thermoplastic elastomer composition for airbags.
<4> The thermoplastic elastomer composition for airbags according to any one of <1> to <3>, wherein the content of the component (B) relative to 100 parts by mass of the component (A) is 20 parts by mass or more and 200 parts by mass or less.
<5> The thermoplastic elastomer composition for airbags according to any one of <1> to <4>, wherein the thermoplastic elastomer composition further comprises 10 parts by mass or more and 100 parts by mass or less of the following component (C) relative 100 parts by mass of the component (A).
   Component (C): Ethylene/ *α* -olefin copolymer
<6> The thermoplastic elastomer composition for airbags according to any one of <1> to <5>, wherein the styrene unit content of the component (B) is 20% by mass or more and 25% by mass or less.
<7> The thermoplastic elastomer composition for airbags according to <6>, wherein the component (B) comprises a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less.
<8> A molded article made of the thermoplastic elastomer composition for airbags according to any one of <1> to <7>.
<9> A composite molded article having a first layer containing the thermoplastic elastomer composition for airbags according to any one of <1> to <7> and a second layer made of a resin film.
<10> An airbag housing cover made of the thermoplastic elastomer composition for airbags according to any one of <1> to <7>.
<11> A thermoplastic elastomer composition for airbags containing a propylene-based polymer and a styrene-based elastomer having a glass transition temperature of -65°C or higher and -45°C or lower, wherein a haze value measured based on JIS K7136-1 for a sheet-like test piece having a thickness of 2 mm obtained by injection molding the thermoplastic elastomer composition for airbags under conditions of a resin temperature of 200°C and a mold temperature of 40°C is 70% or less.

### Advantageous Effects of Invention

The thermoplastic elastomer composition of the present invention is excellent in low-temperature impact resistance, high-temperature strength and optical transparency, and is also suitable for combination with touch panel films. Therefore, according to the thermoplastic elastomer composition of the present invention, it is possible to obtain molded articles and composite molded articles that are excellent in low-temperature impact resistance, high-temperature strength, and light transmittance, and that are suitable for combination with films for touch panels, and airbag housing covers.

The airbag housing cover of the present invention includes a driver airbag housing cover, a front passenger airbag housing cover, a pedestrian airbag housing cover, a knee airbag housing cover, a side airbag housing cover, and a curtain airbag housing cover. It can be suitably used for any of bag housing covers and the like.

In particular, the airbag housing cover of the present invention is suitable as an airbag housing incorporating a touch panel display due to its excellent transparency and suitability for combination with a touch panel film.

### Description of Embodiments

The present invention will be described in detail below. The present invention is not limited to the following description and can be modified and practiced in any manner that is consistent with the scope of the present invention.

### [Thermoplastic Elastomer Composition]

First, the thermoplastic elastomer composition according to the present invention will be explained.

The thermoplastic elastomer composition constituting the airbag housing cover of the present invention is a thermoplastic elastomer composition comprising a propylene-based random copolymer and a styrene-based elastomer having a glass transition temperature in the range of -65°C or higher and -45°C or lower, wherein a total content of the propylene-based random copolymer and the styrene-based elastomer is more than 40% by mass and 100% by mass or less with respect to 100% by mass of the thermoplastic elastomer composition (hereinafter, this thermoplastic elastomer composition may be referred to as "thermoplastic elastomer composition I").

Further, the thermoplastic elastomer composition of the present invention is a thermoplastic elastomer composition comprising a propylene-based random copolymer and a linear styrene-based elastomer having a styrene unit content of 20% by mass or more and 35% by mass or less and a glass transition temperature in the range of -65°C or higher and -45°C or lower, wherein a total content of the propylene-based random copolymer and the linear styrene-based elastomer is more than 40% by mass and 100% by mass or less with respect to 100% by mass of the thermoplastic elastomer composition, and the content of the linear styrene-based elastomer relative to 100 parts by mass of the propylene-based random copolymer is 45 parts by mass or more and 250 parts by mass or less, and the thermoplastic elastomer composition (hereinafter, this thermoplastic elastomer composition may be referred to as "thermoplastic elastomer composition II") has a melt flow rate of 1.0g/10min or more and 50g/10min or less at a temperature of 230°C and a measurement load of 21.18N according to JIS K7210 (1999).

As described above, the thermoplastic elastomer composition II is a preferred embodiment in which the specific styrene-based elastomer of the thermoplastic elastomer composition I is used in a specific proportion.

Hereinafter, the thermoplastic elastomer composition I and the thermoplastic elastomer composition II are referred to as "thermoplastic elastomer compositions of the present invention".

### <Mechanism>

The thermoplastic elastomer composition of the present invention is excellent in low-temperature impact resistance, high-temperature strength, and light transmittance, and has the effect of being suitable for combination with a touch panel film.

Although the details of why the thermoplastic elastomer composition of the present invention exhibits such effects are not clear, the following is presumed as the reason why such effects are exhibited.

Propylene-based polymers include propylene homopolymers and propylene-based copolymers, and propylene-based copolymers include propylene-based random copolymers and propylene-based block copolymers. Among them, the propylene-based random copolymer provides the thermoplastic elastomer composition that is particularly excellent in light transmission, since the propylene-based random copolymer does not include the ethylene propylene copolymer that contributes to light scattering is not included, and the propylene random copolymer has a lower crystallinity.

In addition, it is known that the refractive index of a styrene-based elastomer is also correlated with the styrene unit content, and that the higher the styrene unit content, the higher the refractive index. Therefore, by setting the styrene unit content of the styrene-based elastomer to a specific range, the refractive index of the propylene-based random copolymer and the refractive index of the styrene-based elastomer can be brought close to each other, and the light transmittance can be improved.

In the present invention, a hydrogenated product of a styrene/conjugated diene block copolymer can be specifically used as the styrene-based elastomer.

Here, the styrene unit content is the content of styrene units derived from raw material styrene and introduced into the hydrogenated product of the styrene/conjugated diene block copolymer.

Furthermore, low-temperature impact resistance, high-temperature strength, and light transmittance can be achieved at a higher level by using the styrene-based elastomer having a glass transition temperature in the range of -65°C or higher and -45°C or lower, more preferably having a specific styrene unit content, and still more preferably being a linear styrene-based elastomer as the styrene-based elastomer.

Here, when the styrene-based elastomer has two or more glass transition temperatures, at least one glass transition temperature should be in the range of -65°C or higher and -45°C or lower.

### <Propylene-based Random Copolymer>

The propylene-based random copolymer used in the thermoplastic elastomer composition of the present invention is a random copolymer with propylene units and other monomers such as ethylene units, *α* -olefin units other than propylene, and monomer units other than ethylene and *α* -olefins.

The propylene unit content of the propylene-based random copolymer is usually 50% by mass or more, preferably 85% by mass or more, more preferably 90% by mass or more, still more preferably 94% by mass or more, and the upper limit is preferably 99% by mass or less. When the content of propylene units in the propylene-based random copolymer is at least the above lower limit, heat resistance and rigidity tend to be improved. If the content of propylene units in the propylene-based random copolymer is equal to or less than the above upper limit, the crystallinity is low, so that the obtained thermoplastic elastomer composition has improved light transmittance.

The content of propylene units in the propylene-based random copolymer can be determined by infrared spectroscopy.

Examples of *α* -olefin units other than propylene contained in the propylene-based random copolymer include *α* -olefins having 4 or more and 20 or less carbon atoms. Examples of a -olefins having 4 to 20 carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4- methyl-1-pentene, 2-ethyl-1-hexene, 2,2,4-trimethyl-1-pentene and the like. Preferred are *α* -olefins having 4 to 10 carbon atoms, and more preferred are ethylene, 1-butene, 1-hexene and 1-octene.

The propylene-based random copolymer may contain only one type of these *α* -olefin units and ethylene units, or may contain two or more types.

Specific examples of propylene-based random copolymers include propylene/ethylene random copolymer, propylene/1-butene random copolymer, propylene/1-hexene random copolymer, propylene/1-octene random copolymer, propylene/ethylene/1-butene random copolymer, propylene/ethylene/1-hexene random copolymer, and propylene/ethylene/1-octene random copolymer. A random copolymer of propylene and at least one monomer selected from ethylene and *α* -olefins having 4 to 10 carbon atoms is preferred.

Among these, from the viewpoint of compatibility between low-temperature impact resistance and high-temperature strength and transparency, a propylene-based random copolymer containing 6% by mass or less, for example 1% by mass or more and 6% by mass or less of one or more monomer units selected from ethylene units, butene units, hexene units, and octene units is suitable.

The melt flow rate (MFR) of the propylene-based random copolymer is not limited, but is usually 0.1 g/min or more, and from the viewpoint of appearance of the molded article it is preferably 10 g/10 min or more, more preferably 20 g/min or more, and still more preferably 25 g/10 min or more. It is usually 200 g/10 min or less, and from the viewpoint of tensile strength, preferably 150 g/10 min or less, and more preferably 100 g/10 min or less. The melt flow rate of a propylene-based random copolymer is measured according to JIS K7210 (1999) under conditions of a measurement temperature of 230°C and a measurement load of 21.18N.

For producing the propylene-based random copolymer, the polymerization methods known in the related art in which a known catalyst for polymerization of olefins is used may be used. For example, a multi-stage polymerization method using a Ziegler-Natta catalyst can be mentioned. As the multi-stage polymerization method, a slurry polymerization method, a solution polymerization method, a bulk polymerization method, a gas phase polymerization method, or the like can be used, and two or more of these methods may be combined.

The propylene-based random copolymer used in the thermoplastic elastomer composition of the present invention can also be a commercially available product. The propylene-based random copolymer can be procured from the manufacturers listed below, and can be selected as appropriate. Commercially available products include, for example, Prim Polypro (registered trademark) manufactured by Prime Polymer Co., Ltd., Sumitomo Noblen (registered trademark) manufactured by Sumitomo Chemical Co., Ltd., polypropylene random copolymer manufactured by SunAllomer Co., Ltd., Novatec (registered trademark) PP manufactured by Japan Polypropylene Corporation, Moplen (registered trademark) manufactured by Lyondell Basell, ExxonMobil PP manufactured by ExxonMobil, Formolene (registered trademark) manufactured by Formosa Plastics, Borealis PP manufactured by Borealis, SEETEC PP manufactured by LG Chemical, ASI POLYPROPYLENE manufactured by A. Schulman, INEOS PP manufactured by INEOS Olefins & Polymers, Braskem PP manufactured by Braskem Hanwha Total Petrochemical Random PP manufactured by Hanwha Total, Sabic (registered trademark) PP manufactured by Sabic, TOTAL PETROCHEMICALS Polypropylene manufactured by TOTAL PETROCHEMICALS, YUPLENE (registered trademark) manufactured by SK.

The thermoplastic elastomer composition of the present invention may contain only one type of propylene-based random copolymer, or may contain two or more types having different monomer compositions and physical properties.

### <Styrene-based Elastomer>

The styrene-based elastomer used in the thermoplastic elastomer composition of the present invention has a glass transition temperature in the range of -65°C or higher and -45°C or lower. A combination of the styrene-based elastomer having a glass transition temperature in the range of -65°C or higher and -45°C or lower with a propylene-based random copolymer makes it possible to obtain a thermoplastic elastomer composition which is excellent in light transmittance, low-temperature impact resistance, and high-temperature strength.

From the viewpoint of low-temperature impact resistance, the glass transition temperature of the styrene-based elastomer is preferably in the range of -65°C or higher and -50°C or lower.

The glass transition temperature of a styrene-based elastomer is measured by the DSC method.

When two or more types of styrene-based elastomer are used, the glass transition temperature of each styrene-based elastomer may be within or outside the glass transition temperature range described above. At least one glass transition temperature should be in the range of -65°C or higher and -45°C or lower, preferably in the range of -65°C or higher and -50°C or lower.

The styrene-based elastomer used in the present invention preferably has a styrene unit content of 20% by mass or more and 35% by mass or less from the viewpoint of low-temperature impact resistance, high-temperature strength, and light transmittance.

The styrene unit content of the styrene-based elastomer is more preferably 21% by mass or more from the viewpoint of strength and heat resistance, and more preferably 30% by mass or less from the viewpoint of flexibility and impact resistance, and even more preferably 28% by mass or less, particularly preferably 25% by mass or less.

The styrene unit content of the styrene-based elastomer can be calculated by performing proton NMR measurement with a nuclear magnetic resonance apparatus and quantifying the characteristic groups of styrene.

The styrene unit content when using two or more types of styrene-based elastomers can also be calculated by proportional calculation from the styrene unit content of each styrene-based elastomer and the blending mass ratio of each styrene-based elastomer. In this case, the styrene unit content of each styrene-based elastomer may be within or outside the preferred range of the styrene unit content described above. It suffices that the total styrene unit content of the styrene-based elastomer calculated by proportional calculation is within the preferred range of the above-described styrene unit content.

For example, when a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less are used in combination as styrene-based elastomers, so that the styrene unit content is 20% by mass or more and 35% by mass or less, particularly 20% by mass or more and 25% by mass or less, it becomes easier to achieve both high-temperature strength and low-temperature impact resistance, as well as light transmittance. Preferably the hydrogenated product of the styrene/conjugated diene block copolymer (b1) and the hydrogenated product of the styrene/conjugated diene block copolymer (b2) are hydrogenated styrene/conjugated diene/styrene block copolymers, respectively.

A suitable conjugated diene in the hydrogenated product of the styrene/conjugated diene block copolymer as the styrene-based elastomer is butadiene, isoprene or a mixture thereof. Examples of hydrogenated styrene/conjugated diene block copolymers include hydrogenated styrene/butadiene block copolymers (hereinafter sometimes simply abbreviated as "SEBS").

By using a hydrogenated product of a styrene/conjugated diene block copolymer as a styrene-based elastomer, it is possible to maintain good light resistance of the thermoplastic elastomer composition having high visible light and ultraviolet transmittance better than when a polymer having a double bond in the molecular structure such as styrene-butadiene-styrene block copolymer (SBS) is used as a styrene-based elastomer.

In addition, a thermoplastic elastomer composition excellent in low-temperature impact resistance, high-temperature strength, and light transmittance can be obtained by using a combination of the propylene-based random copolymer described above and a hydrogenated product of a styrene/conjugated diene block copolymer having a styrene unit content of 20% by mass or more and 35% by mass or less, particularly 20% by mass or more and 25% by mass or less, and a glass transition temperature in the range of -65°C or higher and -45°C or lower.

Also, the styrene-based elastomer used in the present invention is preferably a linear styrene-based elastomer. A linear styrene-based elastomer can be easily dispersed in a propylene-based random copolymer and can further improve light transmittance.

Here, the linear styrene-based elastomer is, for example, a hydrogenated product of a styrene/conjugated diene block copolymer in which the conjugated diene portion is butadiene, isoprene, or a mixture thereof. Specifically, the linear styrene-based elastomer is a styrene/ethylene/butylene/styrene copolymer, which is a hydrogenated product of a styrene/butadiene block copolymer.

The hydrogenated product by the styrene/conjugated diene block copolymer as the styrene-based elastomer preferably has a 1,2-microstructure of 60 mol% or less, more preferably 45 mol% or less, as analyzed by the NMR method. Those having a 1,2-microstructure of 60 mol % or less are preferable from the viewpoint of moldability and flexibility. From the viewpoint of weather resistance, the hydrogenation rate of the hydrogenated product of the styrene/conjugated diene block copolymer as the styrene elastomer is preferably 90 mol % or more, more preferably 95 mol % or more.

The weight average molecular weight (Mw) of the styrene-based elastomer is preferably 40,000 or more, more preferably 45,000 or more, still more preferably 48,000 or more, from the viewpoint of releasability.

From the viewpoint of transparency, the weight average molecular weight (Mw) of the styrene-based elastomer is preferably 120,000 or less, more preferably 110,000 or less, and even more preferably 105,000 or less.

On the other hand, a material with high light transmittance and low transparency makes it possible to produce a molded body that looks like frosted glass. From the viewpoint of such appearance, the lower limit of the mass average molecular weight (Mw) of the styrene-based elastomer is preferably 125,000 or more, more preferably 130,000 or more, still more preferably 135,000 or more, and particularly preferably 140,000 or more. In this case, the upper limit of the mass average molecular weight (Mw) is preferably 350,000 or less, more preferably 325,000 or less, even more preferably 300,000 or less, from the viewpoint of fluidity. By setting the molecular weight of the styrene-based elastomer within the range described above, the light reaching the interior of the molded article can be appropriately scattered, and an appearance like frosted glass can be achieved.

When using two or more types of styrene-based elastomer, the weight average molecular weight of the styrene-based elastomer can be obtained by measuring a mixture of each component of the styrene-based elastomer by the GPC method described below. In this case, the weight average molecular weight of each styrene-based elastomer may be within or outside the above-described preferred range of the weight average molecular weight of the styrene-based elastomer, so long as a mixture of the styrene-based elastomers has the weight average molecular weight of the styrene-based elastomer within the preferred range described above.

The mass average molecular weight (Mw) of a styrene-based elastomer is measured by gel permeation chromatography method (GPC method), and can be measured, for example, under the following conditions.
Instrument: "HLC-8220 GPC (R)" manufactured by Tosoh Corporation
Column: "TSKgel Super HM-M (6.0 mm ID×15 cm×2 + G)" manufactured by Tosoh Corporation
Detector: Differential refractive index detector (RI/built-in)
Solvent: chloroform
Temperature: 40°C
Flow rate: 0.25 mL/min
Injection volume: 0.1% by mass x 20 *µ*L
Calibration sample: monodisperse polystyrene
Calibration method: polystyrene conversion
Calibration curve approximation formula: cubic formula (hyperbola): Exclusion limit setting time 12 minutes

Examples of a method for producing a styrene-based elastomer include a method in which a styrene/conjugated diene block copolymer is synthesized in an inert solvent using a lithium catalyst according to the method described in JP S40-23798B, and then hydrogenates it in an inert solvent in the presence of hydrogenation catalyst according to the method described in JP S42-8704B, JP S43-6636B, JP S59-133203A, and JP S60-79005A.

Styrene-based elastomers are also available as commercial products. Examples of styrene-based elastomers include "Kraton (registered trademark) G" manufactured by Kraton Polymer Co., Ltd., "Septon (registered trademark)" manufactured by Kuraray Co., Ltd., and "Tuftec (registered trademark)" manufactured by Asahi Kasei Corporation.

The thermoplastic elastomer composition of the present invention may contain only one type of styrene-based elastomer, or may contain two or more types having different monomer compositions and physical properties.

### <Ethylene/ α -Olefin Copolymer>

From the viewpoint of low-temperature impact resistance, the thermoplastic elastomer composition of the present invention may further contain an ethylene/ *α* -olefin copolymer.

Examples of the ethylene/ *α* -olefin copolymer include one that has a structural unit comprising *α* -olefin units such as propylene, 1-butene, 2-methylpropylene, 1-pentene, 3-methyl-1-butene, 1-hexene, 4-methyl-1-pentene, or 1-octene. The *α* -olefin is preferably an *α* - olefin having 4 to 8 carbon atoms and having a carbon-carbon double bond at the terminal carbon atom, such as propylene, 1-butene, 1-hexene and 1-octene. The ethylene/ *α* -olefin copolymer may be obtained by copolymerizing only one kind of *α* -olefin with ethylene, or by copolymerizing two or more kinds of *α* -olefins with ethylene.

The content of ethylene units in the ethylene/ *α* -olefin copolymer is preferably large in order to prevent fusion due to blocking of the ethylene/ *α* -olefin copolymer. From the viewpoint of low-temperature impact resistance, the smaller the number, the better. Specifically, the lower limit of the ethylene unit content of the ethylene/ *α* -olefin copolymer is usually 50% by mass or more, preferably 55% by mass or more, more preferably 60% by mass or more, and even more preferably 65% by mass or more with respect to the total 100% by mass of the ethylene units and *α* -olefin units. On the other hand, the upper limit is usually 99% by mass or less, preferably 80% by mass or less.

The ethylene unit content, the *α* -olefin unit content, and the later-described non-conjugated diene unit content in the ethylene/ *α* - olefin copolymer can be determined by infrared spectroscopy.

In addition to ethylene units and a -olefin units, the ethylene/ *α* -olefin copolymer may have other monomer units such as monomer units based on a non-conjugated diene (non-conjugated diene units). The non-conjugated dienes include chain non-conjugated dienes such as 1,4-hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, 6-chloromethyl-5-isopropenyl-2-norbornene. Preferred are 5-ethylidene-2-norbornene and dicyclopentadiene.

When the ethylene/ *α* -olefin copolymer has other monomer units such as non-conjugated diene units, the content thereof is usually 10% by mass or less, preferably 5% by mass or less with respect to 100% by mass of the entire ethylene/ *α* -olefin copolymer.

The melt flow rate (MFR) of the ethylene/ *α* -olefin copolymer is not limited, but is usually 10 g/10 min or less, preferably 8.0 g/10 min or less, more preferably 5.0 g/10 min or less, more preferably 3.0 g/10 min or less from the viewpoint of strength. The melt flow rate of the ethylene/ *α* -olefin copolymer is usually 0.01 g/10 min or more, preferably 0.05 g/10 min or more, more preferably 0.10 g/10 min or more, from the viewpoint of fluidity.

The melt flow rate of the ethylene/ *α* -olefin copolymer is measured according to ASTM D1238 under conditions of a measurement temperature of 190°C and a measurement load of 21.18N.

From the viewpoint of low-temperature impact resistance, the density of the ethylene/ *α* -olefin copolymer is preferably 0.88 g/cm³ or less. On the other hand, from the viewpoint of transparency and refractive index, it is preferably 0.86 g/cm³ or more.

The density of the ethylene/ *α* -olefin copolymer can be measured by ISO 1183-A method (measurement temperature: 23°C).

The ethylene/ *α* -olefin copolymer is also available as a commercial product. Commercially available products corresponding to ethylene/ *α* -olefin copolymers include, for example, Engage (registered trademark) and INFUSE (registered trademark) manufactured by Dow Chemical Company.

The thermoplastic elastomer composition of the present invention may contain only one type of ethylene/ *α* -olefin copolymer, or may contain two or more types having different monomer compositions and physical properties.

### <Crystal Nucleating Agent>

The thermoplastic elastomer composition of the present invention may contain a crystal nucleating agent. As the crystal nucleating agent, a diacetal crystal nucleating agent is preferable. By mixing a diacetal-based crystal nucleating agent, crystallization of the propylene-based random copolymer is promoted, and it is expected that light transmittance is improved.

Known diacetal crystal nucleating agents can be used, such as Gelol (registered trademark) D, Gelol (registered trademark) MD and Gelol (registered trademark) DXR manufactured by Shin Nippon Rika Co., Ltd., and Mirad 3988, Mirad NX8000, Mirad NX8000J, Mirad NX8000K, and Mirad NX8000ECO manufactured by Milliken (USA) and SIPAXNA-2 manufactured by GCHTECHNOLORY (China).

Only one of these may be used, or two or more of these may be used.

### <Blending Ratio>

The total content of the propylene-based random copolymer and the styrene-based elastomer in the thermoplastic elastomer composition of the present invention is usually more than 40% by mass, preferably 50% by mass or more, more preferably 70% by mass or more, still more preferably 75% by mass or more, particularly preferably 80% by mass or more, and especially preferably 85% by mass or more with respect to 100% by mass of the thermoplastic elastomer composition from the viewpoint of the effects of excellent low-temperature impact resistance, high-temperature strength, and light transmittance. Its upper limit is 100% by mass.

In the thermoplastic elastomer composition of the present invention, the content ratio of the styrene-based elastomer is usually 20 parts by mass or more, preferably 45 parts by mass or more and 250 parts by mass or less with respect to 100 parts by mass of the propylene random copolymer. The lower limit of the content of the styrene-based elastomer with respect to 100 parts by mass of the propylene-based random copolymer is more preferably 60 parts by mass or more, still more preferably 70 parts by mass or more, and particularly preferably 80 parts by mass or more from the viewpoint of low-temperature impact resistance and light transmission. From the viewpoint of high-temperature strength, the upper limit of the content of the styrene-based elastomer with respect to 100 parts by mass of the propylene-based random copolymer is more preferably 200 parts by mass or less, still more preferably 150 parts by mass or less, particularly preferably 140 parts by mass or less, and especially preferably 130 parts by mass or less.

When the thermoplastic elastomer composition of the present invention contains an ethylene/ *α* -olefin copolymer, it is preferable to include 10 parts by mass or more and 100 parts by mass or less of the ethylene/ *α* -olefin copolymer with respect to 100 parts by mass of the propylene-based random copolymer. By blending the ethylene/ *α* - olefin copolymer so as to satisfy the above relationship, it is possible to control the flexural modulus within a suitable range and obtain a molded article imparted with low-temperature impact resistance. The lower limit of the content of the ethylene/ *α* -olefin copolymer with respect to 100 parts by mass of the propylene-based random copolymer is more preferably 20 parts by mass or more, still more preferably 30 parts by mass or more, and particularly preferably 40 parts by mass or more from the viewpoint of low-temperature impact resistance. The upper limit of the content of the ethylene/ *α* -olefin copolymer with respect to 100 parts by mass of the propylene-based random copolymer is more preferably 70 parts by mass or less, still more preferably 60 parts by mass or less, and particularly preferably 55 parts by mass or less from the viewpoint of high-temperature strength.

When the thermoplastic elastomer composition of the present invention contains a crystal nucleating agent, preferably a diacetal-based crystal nucleating agent, the content of the crystal nucleating agent in the thermoplastic elastomer composition of the present invention is preferably 0.05 parts by mass or more and 5.0 parts by mass or less, more preferably 0.05 parts by mass or more and 1.0 parts by mass or less relative to 100 parts by mass of the total of the propylene-based random copolymer, the styrene-based elastomer and the ethylene/ *α* -olefin copolymer (the total of the propylene-based random copolymer and the styrene-based elastomer when the ethylene/ *α* -olefin copolymer is not contained).

### <Other Components>

The thermoplastic elastomer composition of the present invention may include other optional components for various purposes within a range that does not significantly impair the effects of the present invention, in addition to the propylene-based random copolymer, styrene-based elastomer, ethylene/ *α* -olefin copolymer, and crystal nucleating agent. Examples thereof include additives, inorganic fillers, organic fillers, resins other than the propylene-based random copolymers, the styrene-based elastomer, and the ethylene/ *α* -olefin copolymers (hereinafter referred to as "other resins").

Examples of the additives include a colorant, an antioxidant, a heat stabilizer, a light stabilizer, an ultraviolet absorber, a neutralizer, a lubricant, an anti-fogging agent, an anti-blocking agent, a slip agent, a flame retardant, a dispersant, an antistatic agent, a conductivity-imparting agent, a metal deactivator, a molecular weight modifier, an antibacterial agent, a fluorescent brightening agent and the like. These additives can be blended in the range of usually 0.01 parts by mass or more and 2 parts by mass or less of each additive with respect to a total of 100 parts by mass of the propylene-based random copolymer, the styrene-based elastomer, and the optionally blended ethylene/ *α* - olefin copolymer.

Examples of the above other resins that may be contained in the thermoplastic elastomer composition of the present invention include low-density polyethylene, polyester elastomers, urethane elastomers, polyester resins, polyamide resins, polyurethane resins, styrene resins, polycarbonate resins, polyvinyl chloride resins, and elastomers other than the above (excluding those corresponding to the styrene-based elastomers and the ethylene/ *α* -olefin copolymers). Only one type or two or more types of the other resins listed above can be blended.

### <Method for Producing Thermoplastic Elastomer Composition>

The thermoplastic elastomer composition of the present invention can be manufactured by kneading the propylene-based random copolymer and styrene-based elastomer, and optionally the ethylene/ *α* -olefin copolymer and other components according to a conventional method using a conventional extruder, a Banbury mixer, a roll, a Brabender plastograph, a kneader Brabender, or the like. Among these manufacturing methods, it is preferable to use an extruder, particularly a twin-screw extruder.

When the thermoplastic elastomer composition of the present invention is manufactured by kneading with an extruder or the like, it is usually melt-kneaded while being heated to 155°C or higher and 240°C or lower, preferably 180°C or higher and 220°C or lower. At this time, a known cross-linking agent or cross-linking auxiliary agent may be blended and then subjected to dynamic heat treatment to allow partial cross-linking. However, from the viewpoint of light transmittance, it is preferable not to allow cross-linking.

### <Physical Properties>

The thermoplastic elastomer of the present invention contains the propylene-based random copolymer and the styrene-based elastomer, optionally an ethylene/ α-olefin copolymer, and a crystal nucleating agent to improve high-temperature strength, low-temperature impact resistance, and light transmittance.

The thermoplastic elastomer composition of the present invention is preferably used for airbag housing covers. In the present invention, the "airbag housing cover" means a container in general for storing an airbag. For example, it means a container in which an airbag is housed, the container having an opening when the airbag deploys, or the entire container integrated with this opening.

In such applications, the thermoplastic elastomer composition of the present invention preferably has the following physical properties.

### (Izod Impact Strength)

In the present invention, Izod impact strength at -35°C, -40°C and -45°C according to ISO180 is used as an index of low-temperature impact resistance. The molded article of the thermoplastic elastomer composition of the present invention preferably has an Izod impact strength of 50 kJ/m² or more, more preferably 70 kJ/m² or more. Although the upper limit of the Izod impact strength of the thermoplastic elastomer composition of the present invention is not particularly limited, it is usually 150 kJ/m² or less.

### (MFR)

In the present invention, the melt flow rate (MFR) at a temperature of 230°C and a measurement load of 21.18N according to JIS K7210 (1999) is used as an index of injection moldability of the thermoplastic elastomer composition. The thermoplastic elastomer composition of the present invention preferably has a melt flow rate of 1.0 g/10 min or more and 50 g/10 min or less in order to have excellent injection moldability. When the MFR of the thermoplastic elastomer composition for airbags is 1.0 g/10 min or more, the fluidity tends to be good, and when it is 50 g/10 min or less, burrs and the like during molding can be easily suppressed, which is preferred. From the viewpoint of fluidity, the MFR of the thermoplastic elastomer composition for airbags is more preferably 2.0 g/10 min or more, still more preferably 2.5 g/10 min or more. On the other hand, from the viewpoint of suppressing burrs and the like during injection molding, the MFR of the thermoplastic elastomer composition is more preferably 40 g/10 min or less, still more preferably 20 g/10 min or less, particularly preferably 17 g/10 min or less, and especially preferably 15 g/10 min or less.

### (Normal Temperature Tensile Elongation at Break, Tensile Breaking Strength)

From the viewpoint of material strength, the thermoplastic elastomer composition of the present invention preferably has a tensile elongation at break at 23°C of 300% or more, more preferably 350% or more, according to JIS K6251. If the tensile elongation at break at 23°C is equal to or higher than the above lower limit, the expandability of the airbag housing cover made of the thermoplastic elastomer composition of the present invention tends to be good due to good elongation of the material. Although the upper limit of the tensile elongation at break of the thermoplastic elastomer composition of the present invention is not particularly limited, it is usually 1500% or less.

From the same point of view, the tensile breaking strength measured when measuring the tensile breaking elongation is preferably 10 MPa or more, more preferably 12 MPa or more. If the tensile breaking strength at 23°C is equal to or higher than the above lower limit, the expandability of the airbag housing cover made of the thermoplastic elastomer composition of the present invention tends to be good due to the high material strength. Although the upper limit of the tensile breaking strength of the thermoplastic elastomer composition of the present invention is not particularly limited, it is usually 25 MPa.

### (High Temperature Tensile Breaking Strength)

From the viewpoint of material strength, the thermoplastic elastomer composition of the present invention preferably has a tensile breaking strength of 4.5 MPa or more at 85°C according to JIS K6251, more preferably 5.0 MPa or more, and still more preferably 5.5 MPa or more. If the tensile breaking strength at 85°C is equal to or higher than the above lower limit, the airbag housing cover made of the thermoplastic elastomer composition of the present invention tends to have good expandability due to high material strength. Although the upper limit of the tensile breaking strength of the thermoplastic elastomer composition of the present invention is not particularly limited, it is usually 8 MPa or less.

### (Flexural Modulus)

The thermoplastic elastomer composition of the present invention preferably has a flexural modulus of 600 MPa or less, particularly 200 MPa or more and 550 MPa or less, measured according to JIS K7203. If the flexural modulus of the thermoplastic elastomer composition is equal to or less than the upper limit, the low-temperature impact resistance tends to be good, and if it is equal to or more than the lower limit, the rigidity tends to be excellent.

### (Total Light Transmittance)

From the viewpoint of light transmission, the total light transmittance measured based on JIS K7136-1 for a sheet-like test piece having a thickness of 2 mm obtained by injection molding the thermoplastic elastomer composition of the present invention under the conditions of a resin temperature of 200°C and a mold temperature of 40°C is preferably 60% or more, more preferably 65% or more, still more preferably 70% or more, and particularly preferably 75% or more. With such a numerical range, when used as an airbag housing cover, the light transmission is good and the lighting of the switch becomes easy to see.

### (Haze)

From the viewpoint of transparency, the haze value measured based on JIS K7136-1 for a sheet-like test piece having a thickness of 2 mm obtained by injection molding the thermoplastic elastomer composition under conditions of a resin temperature of 200°C and a mold temperature of 40°C is preferably 70% or less, more preferably 60% or less, still more preferably 50% or less, and particularly preferably 40% or less. From the viewpoint of visibility of the switch, it is essential that the above-mentioned total light transmittance is good. In addition, when the haze, which is an evaluation index of transparency, satisfies the above numerical range, it becomes easier to visually recognize the lighting of the switch more clearly when it is used as an airbag housing cover.

On the other hand, from the viewpoint of design appearance like frosted glass, the haze preferably exceeds 70%, more preferably 75% or more, and even more preferably 80% or more. At this time, the total light transmittance is preferably 60% or more, more preferably 65% or more, still more preferably 70% or more, and particularly preferably 75% or more. By setting the haze and the total light transmittance within the above numerical ranges, it is possible to obtain a frosted glass-like appearance in which light is transmitted while the haze is high.

### <Molded Article such as Airbag Housing Cover>

Using the thermoplastic elastomer composition of the present invention, a molded article such as an airbag housing cover can be formed in general, using an ordinary injection molding method, or, if necessary, using various molding methods such as gas injection molding, injection compression molding, short shot foam molding or the like. In particular, it is preferable that the thermoplastic elastomer composition of the present invention is injection-molded into a molded article such as an airbag housing cover. Molding conditions for injection molding are as follows.

The molding temperature for injection molding the thermoplastic elastomer composition is usually 150°C to 300°C, and preferably 180°C to 280°C. The injection pressure is usually 5 MPa to 100 MPa, and preferably 10 MPa to 80 MPa. The mold temperature is usually 0°C to 80°C, and preferably 20°C to 60°C.

### <Composite Molded Article>

A composite molded article having a first layer made of a thermoplastic elastomer composition containing a propylene-based random copolymer and a styrene-based elastomer having a glass transition temperature in the range of -65°C or higher and -45°C or lower and a second layer made of a resin film is suitable as an airbag housing cover.

Namely, the thermoplastic elastomer composition of the present invention can be integrated with a resin film to form a composite molded article, and the composite molded article is suitable as an airbag housing cover having a first layer containing the thermoplastic elastomer composition of the present invention and a second layer consisting of a resin film.

By using such a composite molded article, it is possible to combine the resin film which has a touch panel operation function as well as design and an airbag housing cover. Examples of resin films include polypropylene films, polyethylene films, polyolefin thermoplastic elastomer films, and polyester films.

The composite molded article of the present invention can be molded by an insert molding method. In the insert molding method, a resin film is incorporated in a mold before molding, and then the mold is filled with the thermoplastic elastomer composition of the present invention. By this method, a composite molded article of the present invention having a first layer made of the thermoplastic elastomer composition of the present invention and a second layer made of a resin film can be obtained.

### <Uses>

The thermoplastic elastomer composition of the present invention is excellent in high-temperature strength, low-temperature impact resistance and light transmittance, and is suitably used as a molding material for airbag housing covers. In particular, among these airbag housing covers, for example, it is suitable as an airbag housing cover for an airbag system that protects the occupants by inflating and deploying by sensing the impact or deformation when a high-speed moving body such as a car is involved in a collision or other accident.

In particular, due to its excellent light transmission properties, the airbag housing cover of the present invention is suitable as an airbag housing cover arranged at a visible position such as a touch panel display.

### < <Thermoplastic Elastomer Compositions for Airbags of <1> to <11>>

In the thermoplastic elastomer composition for airbags <1> to <11> described above, an example of the propylene-based polymer of component (A) includes the propylene-based random copolymer contained in the thermoplastic elastomer composition of the present invention described above. Examples of propylene-based polymers other than propylene-based random copolymers include propylene homopolymers, and propylene-based block copolymers containing propylene units and preferably 15% by mass or less, more preferably 10% by mass or less, and still more preferably 6% by mass or less of ethylene units, *α*-olefin units other than propylene, and monomer units other than ethylene and *α*-olefins. Preferred examples of the *α*- olefin unit contained in the propylene-based block polymer are the same as those of the *α*-olefin unit of the aforementioned propylene-based random copolymer.

Examples of propylene-based polymers other than propylene-based random copolymers include propylene homopolymer, propylene/ethylene block copolymer, propylene/1-butene block copolymer, propylene/1-hexene block copolymer, propylene/ 1-octene block copolymer, propylene/ethylene/1-butene block copolymer, propylene/ethylene/1-hexene block copolymer, propylene/ethylene/1-octene block copolymer, and propylene-based block copolymer obtained by polymerizing propylene alone in the first step and then polymerizing a propylene/ethylene copolymer in the second step. Preferable examples include a propylene homopolymer, a block copolymer of propylene and at least one monomer selected from ethylene and an *α*-olefin having 4 to 10 carbon atoms, and a propylene-based block copolymer obtained by polymerizing a propylene homopolymer in the first step and then a propylene/ethylene copolymer in the second step.

The physical properties and others of the propylene-based polymer of component (A) are the same as those of the aforementioned propylene-based random copolymer.

The styrene-based elastomer and other descriptions in the thermoplastic elastomer composition of the present invention are applied for the styrene-based elastomer as component (B) in the thermoplastic elastomer composition for airbags <1> to <11> and other detailed descriptions.

### EXAMPLES

Now, specific embodiments of the present invention will be described in further detail with reference to examples. The present invention is not limited to the following examples as long as the present invention is within the gist thereof.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

### <Raw Materials>

### [Propylene-based Random Copolymer]

(A-1): Novatec (registered trademark) PP MG03E manufactured by Japan Polypropylene Corporation, Propylene/ethylene random copolymer
MFR (JIS K7210 (1999)): 30 g/10 min (measurement conditions: 230°C, a load of 21.18 N (2.16 kgf))
Propylene unit content: 96% by mass

### [Styrene-Based Elastomer]

(b-1): Kraton (registered trademark) G1652 manufactured by Kraton Polymer Co., Ltd., Hydrogenated product of styrene/butadiene block copolymer (styrene/ethylene/butylene/styrene copolymer (SEBS))
   Weight average molecular weight (Mw): 70,000
   Styrene unit content: 30% by mass
   Glass transition temperature: -55°C
(b-2): Kraton (registered trademark) G1657 manufactured by Kraton Polymer Co., Ltd., Hydrogenated product of styrene/butadiene block copolymer (styrene/ethylene/butylene/styrene copolymer (SEBS))
   Weight average molecular weight (Mw): 110,000
   Styrene unit content: 13% by mass
   Glass transition temperature: -55°C
(b-3): Kraton (registered trademark) G1654 manufactured by Kraton Polymer Co., Ltd., Hydrogenated product of styrene/butadiene block copolymer (styrene/ethylene/butylene/styrene copolymer (SEBS))
   Weight average molecular weight (Mw): 180,000
   Styrene unit content: 31% by mass
   Glass transition temperature: -55°C
(b-4): Kraton (registered trademark) G1651 manufactured by Kraton Polymer Co., Ltd., Hydrogenated product of styrene/butadiene block copolymer (styrene/ethylene/butylene/styrene copolymer (SEBS))
   Weight average molecular weight (Mw): 260,000
   Styrene unit content: 33% by mass
   Glass transition temperature: -55°C

### [Other styrene-based elastomers (having Tg outside the range of - 65°C to -45°C)]

(b'-1): Kraton (registered trademark) G1643 manufactured by Kraton Polymer Co., Ltd., Hydrogenated product of styrene/butadiene block copolymer (styrene/ethylene/butylene/styrene copolymer (SEBS))
   Weight average molecular weight (Mw): 60,000
   Styrene unit content: 20% by mass
   Glass transition temperature: -35°C

### [Ethylene/ α-Olefin Copolymer]

(C-1): Engage (registered trademark) 8100 manufactured by Dow Chemical Company, Ethylene/octene copolymer
   MFR (ASTM D1238): 1 g/10 min (measurement conditions 190°C, a load of 21.18 N (2.16 kgf))
   Density (ISO 1183-A method): 0.87 g/cm³ (measurement temperature: 23°C)
(C-2): Engage (registered trademark) 8150 manufactured by Dow Chemical Company, Ethylene/octene copolymer
   MFR (ASTM D1238): 0.5 g/10 min (measurement conditions 190°C, a load of 21.18 N (2.16 kgf))
   Density (ISO 1183-A method): 0.87 g/cm³ (measurement temperature: 23°C)

### [Crystal Nucleating Agent]

(D-1): Gelol (registered trademark) MD manufactured by New Japan Chemical Co., Ltd., 1,3:2,4-bis-O-(4-methylbenzylidene)-D-sorbitol
Melting point: 255-267°C

### [PMMA]

(E-1): ACRYPET (registered trademark) VH manufactured by Mitsubishi Chemical Corporation, PMMA (polymethyl methacrylate)
MFR (JIS K7210 (1999)): 2.0 g/10 min (measurement temperature 230°C, measurement load 37.3 N)
Deflection temperature under load (ISO 75-2): 100°C (measurement load 1.8 MPa)

### <Evaluation Method>

### 1) Injection moldability: melt flow rate (MFR)

It was measured according to JIS K7210 (1999) under the conditions of a temperature of 230°C and a load of 21.18N.

In the following evaluations 2) to 6), injection-molded test sheets obtained by injection molding of the pellets of the thermoplastic elastomer composition obtained in each example with an in-line screw type injection molding machine (manufactured by Toshiba Machine Co., Ltd., "IS130") at an injection pressure of 50 MPa, a cylinder setting temperature of 190°C (a resin temperature of 200°C) and a mold temperature of 40°C were used for each test.

### 2) Low temperature impact resistance: Izod impact strength

A notched test piece for Izod impact strength measurement having a thickness of 10 mm, a width of 4 mm, and a length of 80 mm was formed by the above injection molding. This test piece was measured at temperatures of -35°C, -40°C, and -45°C according to ISO180 (2010). In the Izod impact test, "P" indicates non-destruction, "H" indicates that the test piece was almost destructed into two parts, but they were still integral through a thin section, and "C" indicates destruction. It was evaluated that the higher the value of Izod impact strength and the higher the value of non-destructive "P", the better the low-temperature impact resistance.

### 3) Flexural modulus

Flexural modulus was measured according to JIS K7203 under the conditions of a span of 64 mm and a bending speed of 1 mm/min.

### 4) Normal temperature tensile breaking elongation/tensile breaking strength (23°C): Tensile breaking test (JIS-3 dumbbell, tensile speed 500 mm / min)

A test piece was prepared by punching out a sheet for a tensile test (2 mm thick × 120 mm wide × 80 mm long sheet) according to JIS K6251 (JIS-3 dumbbell). The tensile breaking elongation and tensile breaking strength of this punched test piece were measured in an atmosphere of 23°C according to JIS K6251. It was evaluated that the larger the values of tensile elongation at break and tensile strength at break, the better.

### 5) High temperature tensile breaking strength (85 °C.): Tensile breaking test (JIS-3 dumbbell, tensile speed 500 mm / min) (unit: %)

A test piece was prepared by punching out a sheet for a tensile test (2 mm thick × 120 mm wide × 80 mm long sheet) according to JIS K6251 (JIS-3 dumbbell). The tensile breaking strength of this punched test piece was measured in an atmosphere of 85°C according to JIS K6251. The larger the value of the tensile breaking strength, the better the evaluation.

In Table-1 below, the numerical value of the tensile breaking strength at 85°C with a mark of ">" indicates that the measured strength reached the upper limit of the measuring apparatus, and the test piece and did not break. The values refer to the stress which was the upper limit of the measuring apparatus, and this stress can be equated with the breaking stress in this evaluation.

### 6) Haze

The haze was measured according to JIS K7136-1 for an injection-molded sheet with a thickness of 2 mm, a width of 120 mm, and a length of 80 mm. It was evaluated that the smaller the haze value, the better the transparency.

### 7) Total light transmittance

The total light transmittance was measured according to JIS K7136-1 for an injection-molded sheet with a thickness of 2 mm, a width of 120 mm, and a length of 80 mm. It was evaluated that the larger the total light transmittance value, the better the light transmittance.

### <Examples/Comparative Examples>

### [Example 1]

As shown in Table-1, 100 parts by mass of (A-1), 100 parts by mass of (b-1), and 0.15 parts by mass of antioxidant (product name Irgastab (registered trademark) FS301FF manufactured by BASF Japan), 0.2 parts by mass of light stabilizer (HALS (SABOSTAB (registered trademark) UV119 manufactured by SONGWON), 0.1 parts by mass of ultraviolet absorber (Tinuvin (registered trademark) 326) manufactured by BASF Japan) and 0.2 parts by mass of silicone oil (KF96-100CS manufactured by Shin-Etsu Chemical Co., Ltd.) for total of 100 parts by mass of (A-1) and (b-1) were blended for 1 minute in a Henschel mixer. The blended material was charged into a co-directional twin-screw extruder ("TEM-26SS" manufactured by Toshiba Machine Co., Ltd., L/D = 48.5, number of cylinder blocks: 12) at a rate of 25 kg/h, and the temperature was raised in the range of 160°C or higher and 210°C or lower to perform melt-kneading to produce pellets of a thermoplastic elastomer composition.

The evaluations 1) to 7) above were performed on the obtained pellets of the thermoplastic elastomer composition. These evaluation results are shown in Table-1.

A composite molded article was prepared by insert molding using the pellets of the obtained thermoplastic elastomer composition and a polypropylene film.

Specifically, Novatec (registered trademark) PP MG03E manufactured by Japan Polypropylene Co., Ltd. was pressed to a thickness of 0.5 mm, cut into 100 mm squares, set in a mold of 100 mm × 100 mm × 3 mm, and injected the pellets.

By this method, a composite molded article was obtained in which the first layer made of the thermoplastic elastomer composition and the second layer made of the polypropylene film were fused and integrated.

### [Examples 2 to 8 and Comparative Examples 1 to 3]

Pellets of the thermoplastic elastomer composition were obtained in the same manner as in Example 1 except that the blending ratio was changed as shown in Tables-1 and 2. In the same manner as in Example 1, 0.15 parts by mass of antioxidant (product name Irgastab (registered trademark) FS301FF manufactured by BASF Japan), 0.2 parts by mass of light stabilizer (HALS (SABOSTAB (registered trademark) UV119 manufactured by SONGWON), 0.1 parts by mass of ultraviolet absorber (Tinuvin (registered trademark) 326) manufactured by BASF Japan) and 0.2 parts by mass of silicone oil (KF96-100CS manufactured by Shin-Etsu Chemical Co., Ltd.) were blended to 100 parts by mass in total of the propylene-based random copolymer, the styrene-based elastomer or other styrene-based elastomer, and the optionally used ethylene/ *α*-olefin copolymer. Descriptions of these blending amounts are omitted in Tables-1 and 2.

The evaluations 1) to 7) above were performed on the obtained pellets of the thermoplastic elastomer composition. These evaluation results are shown in Tables-1 and 2.

**[Table 1]**

| <Table-1 > | | | | | | | | |
|---|---|---|---|---|---|---|---|---|
| | | | | Example | | | | |
| | | | | 1 | 2 | 3 | 4 | 5 |
| Raw material composition | Propylene-based random copolymer | A-1 | part by mass | 100 | 100 | 100 | 100 | 100 |
| | Styrene-based elastomer | b-1 | part by mass | 100 | 50 | 50 | | |
| | | b-2 | part by mass | | 50 | | 50 | 50 |
| | | b-3 | part by mass | | | | 50 | |
| | | b-4 | part by mass | | | | | 50 |
| | Other styrene-based elastomer | b'-1 | part by mass | | | | | |
| | Ethylene/ *α*-olefin copolymer | C-1 | part by mass | | | 50 | | |
| | Crystal nucleating agent | D-1 | part by mass | | | | | |
| Styrene-based elastomer or Other styrene-based elastomer | | Stylene unit content | % by mass | 30 | 22 | 30 | 22 | 22 |
| | | Glass transition temperature | °C | -55 | -55 | -55 | -55 | -55 |
| | | Mw | | 70,000 | 89,000 | 70,000 | 150,000 | 200,000 |
| Total content of propylene-based random copolymer and styrene-based elastomer | | | % by mass | 100 | 100 | 75 | 100 | 100 |
| Evaluation results | MFR | | g/10min | 8 | 12 | 9 | 2 | 2 |
| | Izod impact strength (-35°C) | | KJ/cm² | - | - | - | - | - |
| | Izod impact strength (-40°C) | | KJ/cm² | 64(P) | 84(P) | 74(P) | 83(P) | 87(P) |
| | Izod impact strength (-45°C) | | KJ/cm² | 45(H) | 73(P) | 60(P) | 72(P) | 73(P) |
| | Flexural modulus (23°C) | | MPa | 314 | 294 | 281 | 236 | 234 |
| | Tensile breaking strength (23°C) | | MPa | 22 | 14 | 16 | 15 | 15 |
| | Tensile breaking elongation (23°C) | | % | 600 | 700 | 640 | 640 | 680 |
| | Tensile breaking strength (85°C) | | MPa | > 6.7 | 5.9 | > 5.9 | 6.1 | 6.6 |
| | Haze | | % | 43 | 30 | 48 | 81 | 86 |
| | Total light transmittance | | % | 79 | 78 | 71 | 78 | 78 |

**[Table 2]**

| < Table-2> | | | | | | | | | |
|---|---|---|---|---|---|---|---|---|---|
| | | | | Example | | | Comparataive Example | | |
| | | | | 6 | 7 | 8 | 1 | 2 | 3 |
| Raw material composition | Propylene-based random copolymer | A-1 | part by mass | 100 | 100 | 100 | 100 | 100 | 100 |
| | Atyrene-based elastomer | b-1 | part by mass | 50 | 50 | | | 33.3 | 25 |
| | | b-2 | part by mass | 50 | 50 | 100 | | | |
| | | b-3 | part by mass | | | | | | |
| | | b-4 | part by mass | | | | | | |
| | Other styrene-based elastomer | b'-1 | part by mass | | | | 100 | | |
| | Ethylene/ α-olefin copolymer | C-1 | part by mass | | | | | | 208.3 |
| | | C-2 | part by mass | | | | | 166.6 | |
| | PMMA | E-1 | part by mass | | | | | 33.3 | |
| | Crystal nucleating agent | D-1 | part by mass | 0.2 | 0.4 | | | | |
| Styrene-based elastomer or Other styrene-based elastomer | | Stylene unit content | % by mass | 22 | 22 | 13 | 20 | 30 | 30 |
| | | Glass transition temperature | °C | -55 | -55 | -55 | -35 | -55 | -55 |
| | | Mw | | 89,000 | 89,000 | 110,000 | 60,000 | 70,000 | 70,000 |
| Total content of propylene-based random copolymer and styrene-based elastomer | | | % by mass | 100 | 100 | 100 | 50 | 40 | 37.5 |
| Evaluation results | MFR | | g/10min | 12 | 12 | 17 | 23 | 4 | 5 |
| | Izod impact strength (-35°C) | | KJ/cm² | - | - | - | 15(C) | - | - |
| | Izod impact strength (-40°C) | | KJ/cm² | 80(P) | 78(P) | 84(P) | - | 86(P) | 90(P) |
| | Izod impact strength (-45°C) | | KJ/cm² | 70(P) | 64(P) | 82(P) | - | 82(P) | 103(P) |
| | Flexural modulus (23°C) | | MPa | 300 | 300 | 292 | 166 | 192 | 136 |
| | Tensile breaking strength (23°C) | | MPa | 13 | 13 | 12 | 14 | 17 | 16 |
| | Tensile breaking elongation (23°C) | | % | 700 | 700 | 600 | 700 | 820 | 920 |
| | Tensile breaking strength (85°C) | | MPa | 5.7 | 5.5 | 4.1 | >4.7 | > 1.5 | >1.3 |
| | Haze | | % | 28 | 26 | 54 | 32 | 60 | 59 |
| | Total light transmittance | | % | 79 | 79 | 63 | 80 | 65 | 62 |

### [Discussion of Evaluation results]

Examples 1 to 8 had good high temperature strength, low temperature impact resistance and light transmittance.

Comparative Example 1 comprised (b'-1) which was a hydrogenated product of styrene/butadiene block copolymer having a glass transition temperature exceeding -45°C. It was significantly inferior in the low temperature impact resistance.

Comparative Example 2 comprised the compound equivalent to Example 2 of PTL 6. It was inferior in high temperature strength.

In Comparative Example 3, the total content of the propylene-based random copolymer and the styrene-based elastomer was 37.5% by mass. It was inferior in high temperature strength.

Although the present invention has been described in detail with reference to particular embodiments, it will be apparent to those skilled in the art that various changes may be made thereto without departing from the spirit and scope of the present invention.

The present application is based on Japanese Patent Application No. 2021-108344 filed on June 30, 2021 and Japanese Patent Application No. 2021-207288 filed on December 21, 2021, which are herein incorporated in their entireties by reference.

## Claims

1. An airbag housing cover made of a thermoplastic elastomer composition comprising a propylene-based random copolymer and a styrene-based elastomer having a glass transition temperature in the range of -65°C or higher and -45°C or lower, wherein a total content of the propylene-based random copolymer and the styrene-based elastomer is more than 40% by mass and 100% by mass or less with respect to 100% by mass of the thermoplastic elastomer composition.

2. The airbag housing cover according to claim 1, wherein the airbag housing cover is for being arranged at a visible position.

3. The airbag housing cover according to claim 1 or 2, wherein the styrene-based elastomer is linear.

4. The airbag housing cover according to claim 3, wherein the thermoplastic elastomer composition has a melt flow rate of 1.0g/10min or more and 50g/10min or less at a temperature of 230°C and a measurement load of 21.18N according to JIS K7210 (1999).

5. The airbag housing cover according to claim 4, wherein the content of the styrene-based elastomer in the thermoplastic elastomer composition is 45 parts by mass or more and 250 parts by mass or less relative to 100 parts by mass of the propylene-based random copolymer.

6. The airbag housing cover according to claim 1 or 2, wherein the thermoplastic elastomer composition further comprises 10 parts by mass or more and 100 parts by mass or less of an ethylene/ *α*-olefin copolymer relative to 100 parts by mass of the propylene-based random copolymer.

7. The airbag housing cover according to claim 1 or 2, wherein a styrene unit content of the styrene-based elastomer is 20% by mass or more and 25% by mass or less.

8. The airbag housing cover according to claim 7, wherein the styrene-based elastomer consists of a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less.

9. The airbag housing cover according to claim 1 or 2, wherein a total light transmittance measured based on JIS K7136-1 for a sheet-like test piece having a thickness of 2 mm obtained by injection molding the thermoplastic elastomer composition under conditions of a resin temperature of 200°C and a mold temperature of 40°C is 65% or more.

10. The airbag housing cover according to claim 1 or 2, wherein a haze value measured based on JIS K7136-1 for a sheet-like test piece having a thickness of 2 mm obtained by injection molding the thermoplastic elastomer composition under conditions of a resin temperature of 200°C and a mold temperature of 40°C is 70% or less.

11. A method for manufacturing the airbag housing cover according to claim 1 or 2, comprising a step of injection molding the thermoplastic elastomer composition.

12. A thermoplastic elastomer composition comprising a propylene-based random copolymer and a linear styrene-based elastomer having a styrene unit content of 20% by mass or more and 35% by mass or less and a glass transition temperature in the range of -65°C or higher and -45°C or lower, wherein a total content of the propylene-based random copolymer and the linear styrene-based elastomer is more than 40% by mass and 100% by mass or less with respect to 100% by mass of the thermoplastic elastomer composition, and the content of the linear styrene-based elastomer relative to 100 parts by mass of the propylene-based random copolymer is 45 parts by mass or more and 250 parts by mass or less, and the thermoplastic elastomer composition has a melt flow rate of 1.0g/10min or more and 50g/10min or less at a temperature of 230°C and a measurement load of 21.18N according to JIS K7210 (1999).

13. The thermoplastic elastomer composition according to claim 12, wherein a total light transmittance measured based on JIS K7136-1 for a sheet-like test piece having a thickness of 2 mm obtained by injection molding the thermoplastic elastomer composition under conditions of a resin temperature of 200°C and a mold temperature of 40°C is 65% or more.

14. The thermoplastic elastomer composition according to claim 12 or 13, wherein a haze value measured based on JIS K7136-1 for a sheet-like test piece having a thickness of 2 mm obtained by injection molding the thermoplastic elastomer composition under conditions of a resin temperature of 200°C and a mold temperature of 40°C is 70% or less.

15. The thermoplastic elastomer composition according to claim 12 or 13, wherein the thermoplastic elastomer composition further comprises 10 parts by mass or more and 100 parts by mass or less of an ethylene/ α-olefin copolymer relative to 100 parts by mass of the propylene-based random copolymer.

16. The thermoplastic elastomer composition according to claim 12 or 13, wherein the linear styrene-based elastomer has a styrene unit content of 20% by mass or more and 25% by mass or less.

17. The thermoplastic elastomer according to claim 16, wherein the styrene-based elastomer comprises a hydrogenated product of a styrene/conjugated diene block copolymer (b1) having a styrene unit content of 10% by mass or more and 15% by mass or less, and a hydrogenated product of a styrene/conjugated diene block copolymer (b2) having a styrene unit content of 25% by mass or more and 35% by mass or less.

18. A molded article made of the thermoplastic elastomer composition according to claim 12 or 13.

19. A composite molded article having a first layer containing the thermoplastic elastomer composition according to claim 12 or 13 and a second layer made of a resin film.

20. A composite molded article having a first layer made of a thermoplastic elastomer composition containing a propylene-based random copolymer and a styrene-based elastomer having a glass transition temperature in the range of -65°C or higher and -45°C or lower and a second layer made of a resin film.
